# EUROPÄISCHE PATENTSCHRIFT

(11) **EP 3 260 186 B1**
(45) Veröffentlichungstag und Bekanntmachung des Hinweises auf die Patenterteilung: **22.05.2019**
(21) Anmeldenummer: 16001413.0
(22) Anmeldetag: 23.06.2016
(51) Int. Cl.: B01D 53/04, B01D 53/047

(54) **VERFAHREN ZUM BETREIBEN EINER VERFAHRENSTECHNISCHEN ANLAGE MIT EINER ADSORPTIONSVORRICHTUNG**
METHOD FOR OPERATING A TECHNICAL SYSTEM WITH AN ABSORBING DEVICE
PROCEDE DE FONCTIONNEMENT D'UNE INSTALLATION TECHNOLOGIQUE COMPRENANT UN DISPOSITIF D'ADSORPTION

(43) Veröffentlichungstag der Anmeldung: 27.12.2017
(73) Patentinhaber: Linde Aktiengesellschaft, 80331 München (DE)
(72) Erfinder: Trott, Thomas, 80686 München (DE); Horn, Christian, 80689 München (DE)

(56) Entgegenhaltungen:
- EP-A1- 0 757 970
- JP-A- H1 190 159
- JP-A- 2001 172 004
- JP-A- 2013 198 845
- JP-A- 2016 000 189

## Beschreibung

Die Erfindung betrifft ein Verfahren zum Betreiben einer verfahrenstechnischen Anlage mit einer Adsorptionsvorrichtung.

Gase oder Gasgemische können sorbierbare Stoffe aufnehmen, transportieren und wieder abgeben. Ein sorbierbarer Stoff kann bis zu einer gewissen Menge, in Abhängigkeit von thermodynamischen Parametern, insbesondere Temperatur und Druck, von dem Gasgemisch aufgenommen werden. Die von einem Gasgemisch aufgenommene Menge des sorbierbaren Stoffes wird häufig Beladung genannt. Bei der verfahrenstechnischen Verarbeitung von derartigen Gasgemischen kann es vorkommen, dass sich die thermodynamischen Parameter von einem Prozessschritt zu einem weiteren Prozessschritt stark ändern. Dies führt regelmäßig dazu, dass das Gasgemisch gesättigt oder übersättigt mit dem sorbierbaren Stoff vorliegt. Dann tritt beispielsweise Kondensation auf, wobei eine überschüssige Menge des sorbierbaren Stoffes von dem Gasstrom abgegeben wird und an Grenzflächen kondensiert.

Ein Beispiel hierfür ist die Kondensation von in Prozessgasen enthaltener Feuchtigkeit in Rohrleitungen, wenn diese eine Temperatur aufweisen, die unter dem Taupunkt in Bezug auf den beladenen Gasstrom liegt. In einem solchen Fall kann das Problem auftreten, dass das kondensierte Wasser eine Korrosion der Rohrleitung verursacht.

Insbesondere Druckwechsel-Adsorptionsanlagen und Temperaturwechsel-Adsorptionsanlagen weisen häufig eine phasenweise sehr hohe Beladung des Prozessgases mit einem sorbierbaren Stoff auf, bis hin zu einer Sättigung des Prozessgases mit dem Stoff. Dann kann bereits bei einer kleinen Änderung von Temperatur und/oder Druck eine Kondensation auftreten.

Aus der DD 200 981 A1 ist ein Verfahren zur Dämpfung periodischer Konzentrationsschwankungen in strömenden Medien bekannt. Dabei wird das Medium durch einen mit Sorptionsmittel gefüllten Apparat geleitet, in welchem die über dem Durchschnittswert liegende Konzentration einzelner Komponenten des Mediums sorbiert und somit so lange zurückgehalten werden, bis durch nachströmendes Medium mit unterschiedlicher, zum Beispiel niedrigerer, Konzentration an zuvor sorbierten Komponenten eine Verdrängungsdesorption und somit eine annährend gleichmäßige Abgabe an das Medium erfolgt.

Die EP 0757970 offenbart ein weiteres Verfahren des Standes der Technik.

Es ist daher eine Aufgabe der vorliegenden Erfindung, ein verbessertes Verfahren zur zeitlichen Vergleichmäßigung einer Beladung eines Gasgemischs mit einem sorbierbaren Stoff in einer verfahrenstechnischen Anlage bereitzustellen.

Diese Aufgabe wird gemäß einem ersten Aspekt durch ein Verfahren zum Betreiben einer verfahrenstechnischen Anlage gelöst. Die verfahrenstechnische Anlage weist eine Adsorptionsvorrichtung auf, welche einen mit einem sorbierbaren Stoff beladenen Gasstrom mit einem vorgegebenen Massenstrom ausgibt, wobei der beladene Gasstrom zeitlich abwechselnd aufeinanderfolgende Phasen erniedrigter Beladung und Phasen erhöhter Beladung umfasst. Das Verfahren umfasst die Schritte:
Zuführen des beladenen Gasstroms an einen Eingang einer Sorptionspuffer-Vorrichtung;
Leiten des beladenen Gasstroms in der Sorptionspuffer-Vorrichtung durch ein mit einem zur Aufnahme einer Beladung des sorbierbaren Stoffes geeignetes Sorptionsmittel entlang eines Sorptionspfades, der von dem Eingang zu einem Ausgang der Sorptionspuffer-Vorrichtung führt, wobei der sorbierbare Stoff in Abhängigkeit der Beladung des Gasstroms und Beladung des Sorptionsmittels von dem Gasstrom auf das Sorptionsmittel oder von dem Sorptionsmittel auf den Gasstrom übergeht; und
Abgreifen eines behandelten Gasstroms an dem Ausgang der Sorptionspuffer-Vorrichtung.

Während einer Phase erhöhter Beladung des Gasstroms mit dem sorbierbaren Stoff bildet sich ein sich von dem Eingang der Sorptionspuffer-Vorrichtung entlang des Sorptionspfades erstreckender Bereich mit einer erhöhten Beladung des Sorptionsmittels mit dem sorbierbaren Stoff aus. Während einer darauf folgenden Phase erniedrigter Beladung des Gasstroms verschiebt sich der Bereich mit der erhöhten Beladung des Sorptionsmittels in Richtung zum Ausgang der Sorptionspuffer-Vorrichtung entlang des Sorptionspfades. Dabei ist eine Länge des Sorptionspfades und eine Menge des Sorptionsmittels in der Sorptionspuffer-Vorrichtung derart gewählt, dass die Sorptionspuffer-Vorrichtung im Betrieb der verfahrenstechnischen Anlage zur Aufnahme von wenigstens drei, vorzugsweise wenigstens vier, weiter bevorzugt wenigstens fünf unterschiedlichen Bereichen erhöhter Beladung des Sorptionsmittels entlang des Sorptionspfades eingerichtet ist.

In Ausführungsformen liegt räumlich zwischen zwei Bereichen erhöhter Beladung ein Bereich erniedrigter Beladung vor. Es wird vorzugsweise sichergestellt, dass das Sorptionsmittel in der Sorptionspuffer-Vorrichtung nie vollständig beladen ist.

Ein solches Verfahren ermöglicht es, dass ein behandelter Gasstrom bereitgestellt werden kann, dessen Beladung einen vorgebbaren oberen Grenzwert nicht überschreitet. Der obere Grenzwert kann insbesondere von Prozessschritten abhängig sein, in denen der behandelte Gasstrom verarbeitet wird.

Dies kann beispielsweise ein Einleiten des behandelten Gasstroms in eine Gaspipeline sein, die bei Umgebungstemperaturen betrieben wird.

Unter einem Gasstrom wird vorliegend eine Strömung eines sich in einem gasförmigen Zustand befindlichen Gemischs oder Fluids verstanden. Ein solches Fluid kann unterschiedlich zusammengesetzt sein. Beispielsweise kann das Gemisch Wasserstoff (H₂), Kohlenstoffmonoxid (CO), Kohlenstoffdioxid (CO₂), Methan (CH₄), flüchtige organische Verbindungen, Stickstoff (N₂), Sauerstoff (O₂) und/oder ein Edelgas aufweisen. Die Zusammensetzung des Gasstroms kann zeitlichen Schwankungen unterliegen. Man kann einen Gasstrom als einen Strom von einzelnen Gasvolumina betrachten. Insbesondere wird im Folgenden ein einzelnes Gasvolumen aus dem Gasstrom als ein Beispielvolumen herausgegriffen, um Zustandsänderungen zu erläutern.

Ein solches Gasvolumen kann beispielsweise durch Zustandsgrößen wie Druck, Temperatur, Teilchenzahl und Zusammensetzung charakterisiert werden. Vorliegend wird als Einheit für Druck Bar verwendet, wobei 1 bar ≈ 1,025 hPa. Die Temperatur wird in °C angegeben. Eine Teilchenzahl kann beispielsweise absolut in Mol (definiert durch die Avogadro-Konstante, 1 mol = 6,022 10²³ Teilchen) angegeben werden oder auch relativ bezogen auf eine Grundmenge, zum Beispiel *ppm* (Teilchen pro eine Million Teilchen, von englisch "Parts Per Million"). Die Zusammensetzung kann bezogen auf ein Volumen, eine Masse oder eine Teilchenzahl angegeben werden.

Der Gasstrom weist ferner als Zustandsgröße eine Strömungsgeschwindigkeit auf. Die Strömungsgeschwindigkeit kann beispielsweise als ein Massenstrom angegeben werden. Ein Massenstrom kann in Normkubikmeter/Zeiteinheit, beispielsweise Norm-m³/h angegeben werden. Ein Normkubikmeter umfasst jene Menge eines Gasgemischs, die in einem Volumen von einem Kubikmeter des Gasgemischs bei Standardbedingungen enthalten sind. Standardbedingungen sind beispielsweise ein Standarddruck von pn = 1,01325 bar und eine Standardtemperatur von Tn = 0°C.

Wenn im Folgenden von der Zusammensetzung des Gasstroms gesprochen wird, so ist damit gemeint, dass der Gasstrom für eine Zeitdauer die angegebene Zusammensetzung aufweist. Anders gesagt, der Gasstrom führt eine Anzahl von Gasvolumina mit sich, die die angegebene Zusammensetzung aufweisen.

Eine mögliche Zusammensetzung des Gasstroms ist beispielsweise 70% H₂, 20% CH₄, 10% CO, bezogen auf das Volumen. Abweichungen der Zusammensetzung im %-Bereich oder auch weitere Inhaltsstoffe, beispielsweise Spurengase genannt, können vorhanden sein. Der beladene Gasstrom weist ferner eine Beladung mit einem sorbierbaren Stoff auf. Insbesondere Wasser und organische Verbindungen sind sorbierbare Stoffe und können eine Beladung des Gasstroms darstellen.

Sorption umfasst insbesondere die Prozesse Adsorption, Absorption und Desorption. Adsorption bezeichnet die Anlagerung von sich beispielsweise in einem Gasgemisch befindlichen Teilchen eines sorbierbaren Stoffes an einer Grenzfläche zu einem anderen Medium, wie beispielsweise einem Festkörper wie einem Rohr. Absorption bezeichnet die Aufnahme der Teilchen in einem anderen Medium, wie beispielsweise ein Lösen von CO₂ in flüssigem Wasser. Desorption bezeichnet den umgekehrten Prozess. Das ist beispielsweise ein Übergang des Teilchens von dem adsorbierten Zustand in die Gasphase.

Die Beladung eines Gasstroms kann beispielsweise relativ zu den in einem Gasvolumen enthalten Teilchen angegeben werden. Ein Gasvolumen weist in Abhängigkeit seines Zustands eine maximale Beladung auf. Ist das Gasvolumen maximal mit einem Stoff beladen, so bezeichnet man es auch als gesättigt mit Bezug auf den sorbierbaren Stoff. Die vorliegende Beladung kann relativ zu der maximalen Beladung angegeben werden. Dies kann auch als relativer Gehalt bezeichnet werden. Bei konstantem Druck und vorgegebener Beladung kann eine Taupunkttemperatur definiert werden. Die Taupunkttemperatur, vereinfacht auch als der Taupunkt bezeichnet, ist die Temperatur, bei der der relative Gehalt des sorbierbaren Stoffs in dem Gasvolumen 100% ist. Sinkt die Temperatur unter die Taupunkttemperatur, so bildet sich Tau, d.h. der sorbierbare Stoff kondensiert auf Kondensationskeimen und/oder Oberflächen von Elementen der verfahrenstechnischen Anlage, die mit dem Gasvolumen in Kontakt sind.

Insbesondere kann es vorkommen, dass eine Oberfläche eine Temperatur aufweist, die unter dem Taupunkt des Gasvolumens bezüglich eines sorbierbaren Stoffes liegt. Dann kühlt sich das Gasvolumen, oder zumindest ein Teil des Gasvolumens derart ab, dass es zu Kondensation des sorbierbaren Stoffes auf der Oberfläche kommen kann. Ist der sorbierbare Stoff Wasser und enthält das Gasvolumen einen Anteil an CO₂, so kann es vorkommen, dass kondensiertes (flüssiges) Wasser CO₂ aus dem Gasvolumen absorbiert, was zu einer Absenkung des pH-Werts des Wassers führt. Derartiges saures Wasser kann eine Ursache von Korrosion von Metallleitungen darstellen.

In einem Gasvolumen enthaltenes Wasser kann auch als Wasserdampf, Feuchte, oder Feuchtigkeit bezeichnet werden. Der relative Gehalt wird für Wasser beispielsweise als relative Feuchtigkeit bezeichnet. Bei einer relativen Feuchtigkeit von 0% kann das Gasvolumen als trocken bezeichnet werden, bei einer relativen Feuchtigkeit von 100% kann dieses als gesättigt bezeichnet werden und bei einer relativen Feuchtigkeit zwischen diesen beiden Extrema kann das Gasvolumen auch als feucht bezeichnet werden.

Im Folgenden kann ohne Einschränkung der Allgemeinheit vereinfacht von Wasser als sorbierbarem Stoff ausgegangen und somit von Feuchte oder relativer Feuchte gesprochen werden.

Die Adsorptionsvorrichtung kann insbesondere eine Druckwechsel-Adsorptionsvorrichtung und/oder eine Temperaturwechsel-Adsorptionsvorrichtung umfassen. Derartige Vorrichtungen weisen beispielsweise mehrere Betriebsphasen auf, insbesondere eine Adsorptionsphase und eine Regenerationsphase. In derartigen Vorrichtungen kann ein feuchter Gasstrom während der Adsorptionsphase getrocknet werden, wobei die Beladung des Gasstroms mit Feuchtigkeit herabgesetzt wird. Der von einer solchen Adsorptionsvorrichtung ausgegebene beladene Gasstrom weist während dieser Phase somit eine erniedrigte Beladung mit Feuchtigkeit auf. Insbesondere kann der ausgegebene beladene Gasstrom in dieser Phase auch trocken sein. Während der Regenerationsphase kann eine solche Adsorptionsvorrichtung regeneriert werden, wobei die Adsorptionsvorrichtung einen beladenen Gasstrom mit einer erhöhten Beladung an Feuchtigkeit ausgibt. Insbesondere kann der ausgegebene beladene Gasstrom in dieser Phase gesättigt sein.

Derartige Adsorptionsvorrichtungen können beispielsweise periodisch oder auch abwechselnd mit Phasen von zeitlich unterschiedlicher Länge, die als Intervalle bezeichnet werden können, betrieben werden. Eine Intervalllänge kann beispielsweise einige Minuten oder auch einige Stunden bis hin zu Tagen umfassen.

Vorteilhaft ist der Massenstrom des Gasstroms zumindest phasenweise konstant, was einen kontinuierlichen Betrieb einer Anlage vereinfacht.

Ein Zuführen des beladenen Gasstroms zu der Sorptionspuffer-Vorrichtung kann ein direktes Verbinden eines Ausgangs der Adsorptionsvorrichtung mit dem Eingang der Sorptionspuffer-Vorrichtung, beispielweise mit einer geeigneten Rohrleitung, umfassen. Alternativ können Prozessschritte vorgesehen sein, wie beispielsweise ein Komprimieren des beladenen Gasstroms mit Hilfe eines Kompressors, ein Abkühlen des beladenen Gasstroms und/oder des komprimierten Gasstroms in einer Gaskühlungsvorrichtung. In diesen Fällen wird der komprimierte und/oder abgekühlte beladene Gasstrom dem Eingang der Sorptionspuffer-Vorrichtung zugeführt.

Die Sorptionspuffer-Vorrichtung umfasst insbesondere einen mit einem Eingang und einem Ausgang versehenen Behälter, der zur Aufnahme einer Menge des Sorptionsmittels geeignet ist. Ferner kann der Behälter dazu eingerichtet sein, einem erhöhten Gasdruck, wie beispielsweise wenigstens 20 bar, bevorzugt wenigstens 30 bar standzuhalten.

Der Behälter umfasst ein Volumen. Beispielsweise kann der Behälter eine Zylinderform aufweisen, wobei dann ein Durchmesser und eine Länge des Behälters das Volumen festlegen. Zumindest ein Teil des Volumens des Behälters kann mit dem Sorptionsmittel befüllt werden. Die Menge des Sorptionsmittels ist durch diesen Teil des Volumens auf einen maximalen Wert beschränkt.

Ein Sorptionsmittel ist insbesondere ein poröses Medium, welches dazu geeignet ist, mit einem sorbierbaren Stoff beladen zu werden. Ein Beladen des Sorptionsmittels mit dem sorbierbaren Stoff geschieht insbesondere durch Adsorption oder Absorption des sorbierbaren Stoffes. Das Ausmaß der Adsorption oder Absorption hängt sowohl von der Beladung des Gasstroms, als auch von der Beladung des Sorptionsmittels sowie von den Zustandsgrößen Druck und Temperatur ab. Insbesondere kann auch eine Desorption stattfinden. In welche Richtung ein Teilchen sorbiert hängt insbesondere von dem Verhältnis der Beladung des Sorptionsmittels zu der Beladung des Gasstroms ab. Mit der Richtung der Sorption ist hierbei eine Sorption von dem Gasstrom auf das Sorptionsmittel oder umgekehrt gemeint.

Ein Übergang kann nur stattfinden, wenn der Gasstrom mit dem Sorptionsmittel in einem engen Kontakt steht. Dies wird insbesondere mittels Durchströmens erzielt.

Sorptionsmittel umfassen beispielsweise Aktivkohle, Aktivkoks, Kohlenstoffmolekularsiebe, weitere kohlenstoffhaltige Adsorbentien, Aktivtonerden, Kieselgele, Zeolithe, Trass, weitere oxidische Adsorbentien, polymere Adsorbentien, metallorganische Adsorbentien und/oder Mischungen hiervon.

Ein dem Eingang des Behälters zugeführter Gasstrom tritt in das Innere des Behälters, welcher mit einer Menge des Sorptionsmittel befüllt ist, ein. Aufgrund der Porosität des Sorptionsmittels kann der Gasstrom das Sorptionsmittel entlang des Sorptionspfades durchströmen. Ein von dem Gasstrom mitgeführtes Gasvolumen strömt somit in Richtung zum Ausgang des Behälters entlang des Sorptionspfades. Während des Durchströmens tritt das Gasvolumen in einen engen Kontakt mit in unterschiedlichen Abschnitten des Sorptionspfades angeordnetem Sorptionsmittel, wobei in jedem Abschnitt wie vorstehend beschriebene Übergänge einer Beladung von dem Gasstrom auf das Sorptionsmittel und umgekehrt stattfinden können. Insbesondere kann ein solcher Übergang mehrfach und in jeweils unterschiedliche Richtungen und/oder an unterschiedlichen Stellen entlang des Sorptionspfades stattfinden.

Dies wird nachfolgend beispielhaft anhand eines von dem Gasstrom mitgeführten Gasvolumens beschrieben. Das Gasvolumen ist vor dem Eintritt in den mit dem Sorptionsmittel befüllten Behälter durch seine Zustandsgrößen charakterisiert. Insbesondere weist es eine Beladung auf. Beispielsweise ist es mit Feuchtigkeit gesättigt. In dem Beispiel weist das Sorptionsmittel einen Bereich mit erhöhter Beladung auf, der sich etwa in einem mittleren Abschnitt des Sorptionspfades befindet. Das restliche Sorptionsmittel ist trocken. Tritt das gesättigte Gasvolumen in den Behälter ein und durchströmt das Sorptionsmittel entlang des Sorptionspfades, so trifft es zunächst auf einen Abschnitt mit trockenem Sorptionsmittel. Deshalb kann insbesondere eine Sorption der Feuchtigkeit von dem Gasvolumen auf das Sorptionsmittel stattfinden. Dadurch erniedrigt sich die Feuchtigkeit des Gasvolumens, und die Beladung des Sorptionsmittels in dem Abschnitt erhöht sich, wobei sich ein Bereich mit erhöhter Beladung des Sorptionsmittels in diesem Abschnitt ausbildet.

Das Gasvolumen strömt entlang des Sorptionspfades durch das Sorptionsmittel und wird weiter getrocknet, bis es den Bereich mit erhöhter Beladung des Sorptionsmittels erreicht. In dem Beispiel weist das Gasvolumen nun eine sehr geringe Feuchtigkeit auf, weshalb insbesondere eine Sorption der Feuchtigkeit von dem Sorptionsmittel in das Gasvolumen stattfinden kann. Dadurch erniedrigt sich die Beladung des Sorptionsmittels, und die Feuchtigkeit des Gasvolumens steigt an.

Das nun feuchte Gasvolumen strömt weiter entlang des Sorptionspfades. Es verlässt den Abschnitt mit erhöhter Beladung des Sorptionsmittels und durchströmt einen weiteren Abschnitt, in dem das Sorptionsmittel trocken vorliegt. Deshalb kann erneut eine Sorption von dem Gasvolumen auf das Sorptionsmittel stattfinden, wodurch sich die Feuchtigkeit des Gasvolumens erniedrigt, und sich die Beladung des Sorptionsmittels in dem Abschnitt erhöht. Das Gasvolumen erreicht dann den Ausgang des Behälters und verlässt den Behälter mit einer erniedrigten Feuchtigkeit. In diesem Beispiel wurde somit ein Gasvolumen, das vor der Sorptionspuffer-Vorrichtung gesättigt mit Feuchtigkeit vorlag, in ein Gasvolumen mit einer erniedrigten Feuchtigkeit nach der Sorptionspuffer-Vorrichtung überführt. Darüber hinaus hat sich in dem Sorptionsmittel ein Bereich mit erhöhter Beladung, der am Eingang des Behälters angeordnet ist und sich entlang des Sorptionspfades mit einer bestimmten Breite in Richtung zum Ausgang erstreckt, ausgebildet. Ferner wurde ein Bereich mit erhöhter Beladung des Sorptionsmittels von einem mittleren Abschnitt des Sorptionspfades in einen weiteren Abschnitt entlang des Sorptionspfades in Richtung zum Ausgang verschoben. Eine Breite der Bereiche erhöhter Beladung des Sorptionsmittels hängt von der Menge des sorbierbaren Stoffes in einem jeweiligen Bereich und einer Aufnahmekapazität des Sorptionsmittels ab.

Folgt anschließend eine Phase mit einer erniedrigten Beladung des Gasstroms, d.h. durchströmen Gasvolumina mit einer erniedrigten Beladung die Sorptionspuffer-Vorrichtung, so wird der Bereich erhöhter Beladung des Sorptionsmittels, welcher am Eingang des Behälters angeordnet ist, entlang des Sorptionspfades in einen Abschnitt des Sorptionspfades verschoben, in dem das Sorptionsmittel zu Beginn dieser Phase eine erniedrigte Beladung aufweist. Ferner wird das Gasvolumen, welches nach dem Durchströmen des in dem mittleren Abschnitt angeordneten Sorptionsmittels, das zunächst eine erniedrigte Beladung aufweist, eine erniedrigte Beladung aufweisen. Daher kann das Gasvolumen, wenn es den angrenzenden Abschnitt erreicht, Feuchtigkeit aufnehmen. Das in dem angrenzenden Abschnitt angeordnete Sorptionsmittel weist einen Bereich mit erhöhter Beladung auf, der sich in der vorangehende Phase ausgebildet hat. Das Gasvolumen nimmt einen Teil der Feuchtigkeit auf, wodurch seine Feuchtigkeit ansteigt. Anschließend tritt das Gasvolumen auf dem Behälter aus. Es hat somit in dieser Phase eine Verschiebung der Bereiche erhöhter Beladung innerhalb des Sorptionsmittels stattgefunden. Der zunächst mit einer erniedrigten Beladung beladene Gasstrom wurde in einen behandelten Gasstrom mit einer höheren Beladung überführt.

Insbesondere ist die Menge des Sorptionsmittels und die Länge des Sorptionspfades in der Sorptionspuffer-Vorrichtung derart gewählt, dass in beiden Phasen die Beladung des behandelten Gasstroms den vorgegebenen Grenzwert nicht übersteigt. In der Phase erhöhter Beladung des beladenen Gasstroms ist die relativ dazu erniedrigte Beladung des behandelten Gasstroms geringer als der Grenzwert. In der Phase erniedrigter Beladung des beladenen Gasstroms ist die relativ dazu erhöhte Beladung des behandelten Gasstroms geringer als der Grenzwert. Die Beladung des behandelten Gasstroms muss jedoch nicht zwingend zeitlich konstant sein, sondern kann sich von Phase zu Phase unterscheiden. Im zeitlichen Mittel, wobei eine Mittelungszeitspanne wenigstens einige Phasen erhöhter und erniedrigter Phasen umfasst, sind die Beladung des beladenen Gasstroms und die Beladung des behandelten Gasstroms gleich groß.

Man kann eine Beladungsfront definieren, die die Beladung des Sorptionsmittels in dem Behälter entlang des Sorptionspfades angibt. Die Beladungsfront lässt sich beispielsweise in einem Diagramm darstellen, wobei eine Achse eine Position entlang des Sorptionspfades angibt und eine weitere Achse gibt die Beladung des Sorptionsmittels an der entsprechenden Position an. Ein solches Diagramm erlaubt eine verständliche Darstellung der Funktionsweise der Sorptionspuffer-Vorrichtung, insbesondere wenn die Beladungsfront zu mehreren unterschiedlichen Zeitpunkten dargestellt wird.

Wie in dem Beispiel beschrieben, bildet sich in einer ersten Phase in Abhängigkeit der Beladung des beladenen Gasstroms ein Bereich mit erhöhter Beladung in dem Sorptionsmittel aus, der sich von dem Eingang des Behälters entlang des Sorptionspfades mit einer gewissen Breite hin zum Ausgang des Behälters erstreckt. Die Breite dieses Bereichs kann dabei von der insgesamt eingetragenen Menge des sorbierbaren Stoffs während der Phase erhöhter Beladung abhängen. Die Menge lässt sich beispielsweise aus der Dauer der Phase, dem Massenstrom sowie der Beladung des Gasstroms berechnen. In einer auf diese Phase folgenden Phase mit erniedrigter Beladung des beladenen Gasstroms wird der Bereich mit erhöhter Beladung in dem Sorptionsmittel entlang des Sorptionspfades in Richtung zum Ausgang hin verschoben. Dies geschieht durch mehrfache Übertragung des sorbierbaren Stoffs, wie in dem Beispiel weiter oben beschrieben. Man kann auch sagen, dass die Beladungsfront entlang des Sorptionspfades wandert. Die Strecke, die die Beladungsfront während einer Phase erniedrigter Beladung zurücklegt, kann insbesondere von der Dauer der Phase erniedrigter Beladung des beladenen Gasstroms, dem Massenstrom sowie der Beladung abhängen. In einer periodischen Abfolge dieser beiden Phasen und wenn der Massenstrom und die Beladung in unterschiedlichen Phasen erhöhter Beladung zueinander gleich oder zumindest ähnlich sind, und der Massenstrom und die Beladung in unterschiedlichen Phasen erniedrigter Beladung des beladenen Gasstroms zueinander gleich oder zumindest ähnlich sind, kann sich eine Beladungsfront ausbilden, bei der ein Abstand zwischen zwei Bereichen mit erhöhter Beladung des Sorptionsmittels jeweils konstant ist. Die Beladungsfront ist demnach durch eine Funktion mit periodisch beabstandeten relativen Maxima und/oder Minima beschreibbar.

Ein Abgreifen des behandelten Gasstroms am Ausgang der Sorptionspuffer-Vorrichtung kann beispielsweise ein Einleiten des Gasstroms in eine an den Ausgang angeschlossene Rohrleitung, insbesondere eine Gaspipeline, umfassen. Unter einer Gaspipeline wird eine Anordnung verstanden, die dazu eingerichtet ist, den Gasstrom über eine vorgegebene Strecke, beispielsweise 10 km oder auch 20 km, zu transportieren. Die Gaspipeline kann beispielsweise aus Rohren gebildet sein. Insbesondere kann die Gaspipeline bei Umgebungstemperatur betrieben werden.

Gemäß einer Ausführungsform des Verfahrens umfasst dieses die Schritte: Entspannen des behandelten Gasstroms mit Hilfe eines in Abströmrichtung zu der Sorptionspuffer-Vorrichtung angeordneten Druckminderers, wobei ein entspannter Gasstrom erzeugt wird; und Zuführen des entspannten Gasstroms an eine der Sorptionspuffer-Vorrichtung nachgeschalteten Gaspipeline.

Eine solche Druckabsenkung ist besonders vorteilhaft, da damit eine Taupunktabsenkung erwirkt werden kann. Ein Druckminderer kann auch als Druckminderungsventil, Reduzierventil oder Druckventil bezeichnet werden. Der Druckminderer ist insbesondere dazu eingerichtet, einen vorgebbaren Differenzdruck zwischen der Anströmseite und der Abströmseite herzustellen. Alternativ kann der Druckminderer dazu eingerichtet sein, einen vorgebbaren Maximaldruck auf der Abströmseite nicht zu überschreiten oder einen vorgebbaren Minimaldruck auf der Abströmseite nicht zu unterschreiten.

Gemäß einer weiteren Ausführungsform des Verfahrens beträgt ein Gasdruckunterschied zwischen der Sorptionspuffer-Vorrichtung und der Gaspipeline 5 bar - 10 bar.

Beispielsweise kann ein Gasdruck am Ausgang des Behälters der Sorptionspuffer-Vorrichtung 23 bar sein und ein Gasdruck in einer nachgeschalteten Gaspipeline kann 17 bar sein. Dann entspannt sich der Gasstrom um die Druckdifferenz von 6 bar.

Gemäß einer weiteren Ausführungsform des Verfahrens umfasst dieses den Schritt: Abkühlen des beladenen Gasstroms mit Hilfe einer der Sorptionspuffer-Vorrichtung vorgeschalteten Gaskühlungsvorrichtung, wobei ein abgekühlter Gasstrom erzeugt wird.

Durch die Abkühlung des Gasstroms kann ein relativer Gehalt eines sorbierten Stoffs erhöht werden. Wenn der Gasstrom vor der Abkühlung bereits gesättigt oder fast gesättigt vorlag, so kann dies insbesondere zu einer Kondensation und damit einer Abscheidung des sorbierten Stoffes in der Gaskühlungsvorrichtung führen. Dies kann vorteilhaft und erwünscht sein, um die absolute Beladung des Gasstroms zu erniedrigen. Insbesondere wenn der behandelte Gasstrom einer bei Umgebungstemperaturen betriebenen Gaspipeline zugeführt wird und die Umgebungstemperaturen gering sind, wie beispielsweise im Winter, kann dieser Schritt dazu beitragen, dass die Beladung des behandelten Gasstroms einen vorgebbaren Grenzwert nicht überschreitet. Die Gaskühlungsvorrichtung kann auch als ein Kühler oder ein Abscheider bezeichnet werden.

Gemäß einer weiteren Ausführungsform des Verfahrens beträgt eine Gastemperatur des abgekühlten Gasstroms 20°C - 50°C.

Gemäß einer weiteren Ausführungsform des Verfahrens umfasst dieses den Schritt: Komprimieren des beladenen Gasstroms mit Hilfe eines Kompressors, wobei ein mit einem Druck beaufschlagter Gasstrom erzeugt wird.

Dies ermöglicht es, einen vorteilhaften Prozessdruck zu aufzubauen. Insbesondere kann hiermit gewährleistet werden, dass beispielsweise mittels eines abströmseitig zu der Sorptionspuffer-Vorrichtung angeordneten Druckminderers eine Druckdifferenz realisiert werden kann. Ferner kann sichergestellt werden, dass ein Massenstrom aufrechterhalten bleibt, denn die Gasströmung benötigt aufgrund von Reibungsverlusten Energie. Dies macht sich insbesondere durch einen Druckabfall entlang einer Strömung bemerkbar. Insbesondere kann daher die Strömung durch die Sorptionspuffer-Vorrichtung sichergestellt werden sowie die Strömung durch eine optionale Gaspipeline.

Ferner kann hiermit erwirkt werden, dass der Druck in der Sorptionspuffer-Vorrichtung zeitlich konstant ist und nicht von weiteren Prozessen abhängt.

Gemäß einer weiteren Ausführungsform des Verfahrens beträgt ein Gasdruck des mit dem Druck beaufschlagten Gasstroms 20 bar - 30 bar.

Gemäß einer weiteren Ausführungsform des Verfahrens umfasst die Adsorptionsvorrichtung eine Druckwechsel-Adsorptionsvorrichtung und/oder eine Temperaturwechsel-Adsorptionsvorrichtung.

Derartige Adsorptionsvorrichtungen können insbesondere periodischen betrieben werden. Dann sind die Intervalle der Phasen erhöhter Beladung und Phasen erniedrigter Beladung immer gleich lang. Darüber hinaus kann eine Beladung des beladenen Gasstroms in den jeweiligen Phasen jeweils gleich oder zumindest ähnlich sein. In diesem Fall bildet sich eine wie vorstehend beschriebene periodische Beladungsfront aus, deren Periode mit den Intervalllängen korrespondiert.

Gemäß einer weiteren Ausführungsform des Verfahrens umfasst der Gasstrom gasförmigen Wasserstoff, gasförmiges Kohlenstoffmonoxid, gasförmiges Kohlenstoffdioxid, gasförmige organische Verbindungen, gasförmiges Wasser, gasförmigen Stickstoff, gasförmigen Sauerstoff und/oder ein gasförmiges Edelgas sowie Kombinationen hiervon.

Gasförmige organische Verbindungen weisen insbesondere eine Summenformel wie CₙH₂ₙ₊₂ auf. Derartige sorbierbare Stoffe werden auch als flüchtige organische Verbindungen oder VOCs (von englisch: Volatile Organic Compounds) bezeichnet.

Gemäß einer weiteren Ausführungsform des Verfahrens weist der beladene Gasstrom eine Wassermenge von 0 - 4000 mol-ppm auf und der behandelte Gasstrom weist eine Wassermenge von 500 - 2000 mol-ppm, bevorzugt 750 - 1500 mol-ppm auf.

Somit ist eine Vergleichmäßigung der Beladung des Gasstroms vorteilhaft erzielt. Beispielsweise beträgt die Feuchtigkeit des beladenen Gasstroms in einer Phase erhöhter Beladung 4000 ppm und die Feuchtigkeit des behandelten Gasstroms in dieser Phase beträgt 1500 ppm. In der Phase erniedrigter Beladung beträgt die Feuchtigkeit des beladenen Gasstroms beispielsweise 0 ppm und die Feuchtigkeit des behandelten Gasstroms beträgt 750 ppm.

Gemäß einer weiteren Ausführungsform des Verfahrens dauert die Phase erhöhter Beladung 2 - 10 h und die Phase erniedrigter Beladung dauert wenigstens doppelt so lange, vorzugsweise wenigstens dreimal so lange wie die Phase erhöhter Beladung.

Dies ermöglicht es vorzugsweise, das Verfahren auch für Prozesse mit langen Intervallen einzusetzen.

Gemäß einer weiteren Ausführungsform des Verfahrens liegt ein Massenstrom des Gasstroms zwischen 500 Norm-m³/h und 20000 Norm-m³/h, bevorzugt zwischen 8000 Norm-m³/h und 17000 Norm-m³/h.

Dies ermöglicht es vorteilhaft, das Verfahren für verfahrenstechnische Anlagen unterschiedlicher Größe einzusetzen. Ferner kann das Verfahren auch bei zeitlich schwankenden Gasströmen eingesetzt werden.

Weitere Vorteile des Verfahrens oder von Ausführungsformen des Verfahrens werden im Folgenden genannt.

Die Sorptionspuffer-Vorrichtung benötigt keine eigene Energiequelle. Ihre Verwendung führt lediglich zu einem Druckabfall des Gasstroms.

Weiterhin kann es möglich sein, den behandelten Gasstrom, der eine vergleichmäßigte Beladung aufweist, in Prozessen zu verwenden, in denen die Beladung des beladenen Gasstroms zumindest phasenweise zu hoch ist. Dies kann zu einer effizienteren Nutzung der verfahrenstechnischen Anlage und einer Einsparung an Rohstoffen und Energie beitragen.

Ferner kann eine Vergleichmäßigung der Beladung des Gasstroms erreicht werden, ohne dass der sorbierbare Stoff als Abfallprodukt anfällt, womit beispielsweise Entsorgungskosten eingespart werden können. Zusätzlich ist die Sorptionspuffer-Vorrichtung für eine dauerhaft kontinuierliche Nutzung eingerichtet.

Außerdem kann eine solche Sorptionspuffer-Vorrichtung einen sehr einfachen Aufbau aufweisen, weshalb sie günstig zu fertigen sein kann und nur einen geringen Wartungsaufwand benötigen kann.

Darüber hinaus ist es möglich, dieses Verfahren auch bei verfahrenstechnischen Prozessen mit sehr langen Intervallen anzuwenden, da immer eine ausreichende Menge des Sorptionsmittels und ein hinreichend langer Sorptionspfad bereitgestellt sind.

Gemäß einem zweiten Aspekt wird eine verfahrenstechnische Anlage zur Durchführung des Verfahrens gemäß des ersten Aspekts oder einer der Ausführungsformen des ersten Aspekts vorgeschlagen. Die verfahrenstechnische Anlage weist eine Sorptionspuffer-Vorrichtung zur Behandlung eines mit einem sorbierbaren Stoff beladenen Gasstroms auf. Eine Länge eines Sorptionspfades und eine Menge eines Sorptionsmittels in der Sorptionspuffer-Vorrichtung sind derart eingerichtet, dass die Sorptionspuffer-Vorrichtung im Betrieb der verfahrenstechnischen Anlage zur Aufnahme von wenigstens drei, vorzugsweise wenigstens vier, weiter bevorzugt wenigstens fünf unterschiedlichen Bereichen erhöhter Beladung des Sorptionsmittels entlang des Sorptionspfades geeignet ist.

Gemäß einer Ausführungsform der verfahrenstechnischen Anlage ist diese ferner dazu eingerichtet, den beladenen Gasstrom derart zu behandeln, dass der behandelte Gasstrom eine erniedrigte Beladung gegenüber der erhöhten Beladung des beladenen Gasstroms und dass der behandelte Gasstrom eine erhöhte Beladung gegenüber der erniedrigten Beladung des beladenen Gasstroms aufweist.

Gemäß einem dritten Aspekt wird ein Herstellungsverfahren für eine Sorptionspuffer-Vorrichtung zur Behandlung eines Gasstroms vorgeschlagen. Die Sorptionspuffer-Vorrichtung eignet sich insbesondere für den Einbau in die verfahrenstechnische Anlage gemäß des zweiten Aspekts und für den Betrieb in einer verfahrenstechnischen Anlage gemäß dem Verfahren des ersten Aspekts oder einer der Ausführungsformen des Verfahrens. Die vorgeschlagenen Sorptionspuffer-Vorrichtung weist einen mit einem Sorptionsmittel befüllten Behälter auf, der einen Eingang und einen Ausgang aufweist, derart, dass ein dem Eingang zugeführter Gasstrom entlang eines Sorptionspfads das Sorptionsmittel durchströmt. Der Sorptionspfad führt in dem Behälter von dem Eingang zum Ausgang. Eine Länge des Sorptionspfades und eine Menge des Sorptionsmittels in der Sorptionspuffer-Vorrichtung werden derart gewählt, dass die Sorptionspuffer-Vorrichtung im Betrieb der verfahrenstechnischen Anlage zur Aufnahme von wenigstens drei, vorzugsweise wenigstens vier, weiter bevorzugt wenigstens fünf unterschiedlichen Bereichen erhöhter Beladung des Sorptionsmittels entlang des Sorptionspfades geeignet ist.

Weitere mögliche Implementierungen des Verfahrens umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Verfahrens hinzufügen.

Die zu dem Verfahren genannten Ausführungsformen gelten für die verfahrenstechnische Anlage sowie für das Herstellungsverfahren derselben entsprechend.

Weitere vorteilhafte Ausgestaltungen und Aspekte des Verfahrens sind Gegenstand der Unteransprüche sowie der im Folgenden beschriebenen Ausführungsbeispiele des Verfahrens. Im Weiteren wird das Verfahren anhand von bevorzugten Ausführungsbeispielen unter Bezugnahme auf die beigelegten Figuren näher erläutert.
Fig. 1 zeigt ein R&I-Fließschema (Rohrleitungs- und Instrumentenfließschema) eines ersten Ausführungsbeispiels einer verfahrenstechnischen Anlage, die zur Durchführung des Verfahrens geeignet ist;
Fig. 2 zeigt ein Beispiel eines zeitlichen Ablaufs einer Beladung eines beladenen Gasstroms und eines behandelten Gasstroms;
Fig. 3 zeigt mehrere Diagramme eines Beispiels einer Beladung eines Sorptionsmittels in der Sorptionspuffer-Vorrichtung mit einem sorbierbaren Stoff zu unterschiedlichen Zeitpunkten;
Fig. 4 zeigt ein R&I-Fließschema eines zweiten Ausführungsbeispiels einer verfahrenstechnischen Anlage, die zur Durchführung des Verfahrens geeignet ist;
Fig. 5 zeigt ein Diagramm eines Beispiels einer Beladung eines Sorptionsmittels in der Sorptionspuffer-Vorrichtung mit einem sorbierbaren Stoff zu einem Zeitpunkt;
Fig. 6 zeigt ein R&I-Fließschema eines dritten Ausführungsbeispiels einer verfahrenstechnischen Anlage, die zur Durchführung des Verfahrens geeignet ist; und
Fig. 7 zeigt ein Ablaufdiagramm eines Ausführungsbeispiels eines Verfahrens zum Betreiben einer verfahrenstechnischen Anlage.

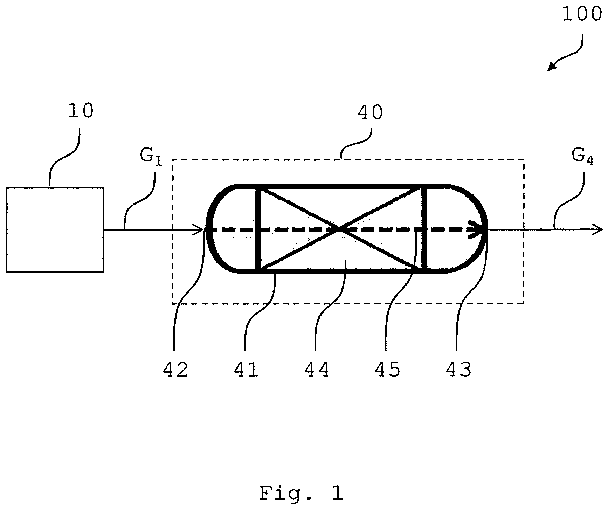

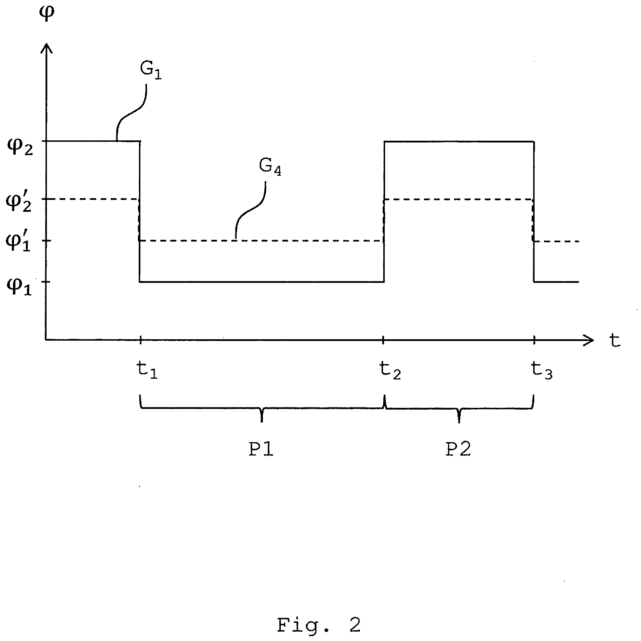

Fig. 1 zeigt ein R&I-Fließschema eines ersten Ausführungsbeispiels einer verfahrenstechnischen Anlage 100, die zur Durchführung des Verfahrens geeignet ist. Die verfahrenstechnische Anlage 100 umfasst in dem Ausführungsbeispiel der Fig. 1 eine Adsorptionsvorrichtung 10 und eine Sorptionspuffer-Vorrichtung 40. Die Adsorptionsvorrichtung 10 des Ausführungsbeispiels gibt in einer Phase P1 (siehe Fig. 2) für etwa 18h einen beladenen Gasstrom G₁ aus, dessen Beladung erniedrigt ist. In einer sich daran anschließenden Phase P2 gibt sie für eine Dauer von etwa 6h einen beladenen Gasstrom G₁ aus, der mit 1200 - 4000 ppm Wasser beladen ist. Der beladene Gasstrom G₁ umfasst 70% H₂, 10% CO und 20% CH₄, bezogen auf das Volumen, und strömt mit einem Massenstrom von 8000 - 17000 Norm-m3/h.

Der beladene Gasstrom G₁ wird der Sorptionspuffer-Vorrichtung 40 zugeführt. Diese weist einen mit einem Sorptionsmittel 44 beladenen Behälter 41 auf, welcher einen Eingang 42 und einen Ausgang 43 aufweist. Der Behälter 41 ist mit dem Sorptionsmittel 44 befüllt, welches auf einem Sorptionspfad 45 von einem Gasstrom durchströmbar ist. Der Behälter 41 des Ausführungsbeispiels hat eine Zylinderform mit einem Innendurchmesser von 2,2 m und einer Höhe von 7,5 m und ist mit etwa 22 t Silikagel als das Sorptionsmittel 44 befüllt. Der beladene Gasstrom G₁ tritt über den Eingang 42 in das mit dem Sorptionsmittel 44 befüllte Innere des Behälters 41 ein und durchströmt diesen entlang des von dem Eingang 41 zu dem Ausgang 43 führenden Sorptionspfades 45. Dabei vergleichmäßigt sich die Beladung des Gasstroms G₁ derart, dass der behandelte Gasstrom G₄ eine Beladung von 750 ppm - 1500 ppm aufweist und eine Taupunktabsenkung um 10°C - 15°C erzielt ist.

Fig. 2 zeigt ein Beispiel eines zeitlichen Ablaufs einer Beladung ϕ eines beladenen Gasstroms G₁ und eines behandelten Gasstroms G₄, der beispielsweise bei einer verfahrenstechnischen Anlage 100 gemäß des Ausführungsbeispiels der Fig. 1 auftreten kann. Es ist ein Diagramm mit einer Zeitachse t und einer Beladungsachse ϕ dargestellt. Zu einem Zeitpunkt t₁ beginnt eine erste Phase P1, in welcher der beladene Gasstrom G₁ eine erniedrigte Beladung ϕ₁ aufweist. Die Phase P1 endet zu einem Zeitpunkt t₂, zu welchem die Beladung ϕ des beladenen Gasstroms G₁ auf eine erhöhte Beladung ϕ₂ ansteigt, was für die Dauer der Phase P2 bis zum Zeitpunkt t₃ anhält. Das Diagramm zeigt nur einen kleinen Ausschnitt umfassend eine Phase P1 mit erniedrigter Beladung ϕ₁ und eine Phase P2 erhöhter Beladung ϕ₂. Wie angedeutet, gehen diesem Zeitabschnitt weitere Phasen voraus und weitere Phasen folgen nach. Dabei kann die Dauer von einzelnen Phasen sowie die Beladung ϕ eines Gasstroms unterschiedlich von dem gezeigten Beispiel sein. Außerdem kann zwischen zwei Phasen auch eine graduelle Änderung der Beladung ϕ eines Gasstroms auftreten.

In dem Diagramm der Fig. 2 ist zusätzlich ein Beispiel eines Verlaufs einer Beladung ϕ des behandelten Gasstroms G₄ (gestrichelte Linie) eingezeichnet. In der Phase P1, wenn der beladene Gasstrom G₁ eine erniedrigte Beladung ϕ₁ aufweist, weist der behandelte Gasstrom G₄ eine gegenüber der erniedrigten Beladung ϕ₁ erhöhte Beladung ϕ'₁ auf. In der Phase P2, wenn der beladene Gasstrom G₁ eine erhöhte Beladung ϕ₂ aufweist, weist der behandelte Gasstrom G₄ eine gegenüber der erhöhten Beladung ϕ₂ erniedrigte Beladung ϕ'₂ auf. Insgesamt ist somit eine Vergleichmäßigung der Beladung ϕ des Gasstroms erzielt, die sich in einer verringerten Differenz der erhöhten ϕ₂,ϕ'₂ und der erniedrigten Beladung ϕ₁,ϕ'₁ ausdrückt.

Insbesondere ist es möglich, dass der behandelte Gasstrom G₄ eine Beladung ϕ' aufweist, die in einer Phase P1 erniedrigter Beladung ϕ₁ des beladenen Gasstroms G₁ langsam, beispielsweise exponentiell abklingend, gegen eine erniedrigte Beladung ϕ'₁ strebt. Ebenso kann es insbesondere sein, dass die Beladung ϕ' des behandelten Gasstroms G₄ in einer Phase P2 mit erhöhter Beladung ϕ₂ des beladenen Gasstroms G₁ von dem Wert erniedrigter Beladung ϕ'₁ langsam, beispielsweise exponentiell, gegen eine erhöhte Beladung ϕ'₂ des behandelten Gasstroms G₄ strebt.

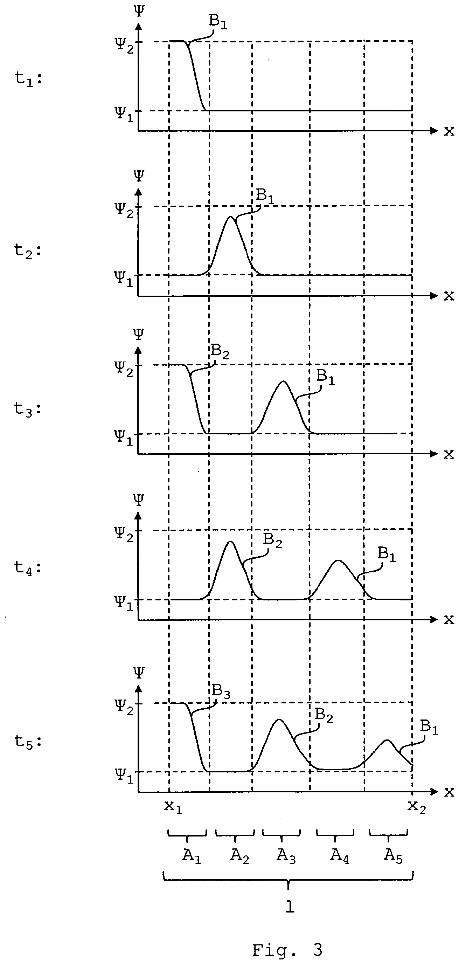

Fig. 3 zeigt mehrere Diagramme eines Beispiels einer Beladung ψ₁ eines Sorptionsmittels 44 mit dem sorbierbaren Stoff in der Sorptionspuffer-Vorrichtung 40 entlang der Länge l = x₂ - x₁ des Sorptionspfades 45 zu unterschiedlichen Zeitpunkten t₁ - t₅. Die Diagramme sind aneinander ausgerichtet und übereinander angeordnete Punkte auf der x-Achse entsprechen sich, was mit den durchgehenden gestrichelten Linien verdeutlicht ist. Die Beschriftung der x-Achse findet sich aus Gründen der Übersicht nur unter dem Diagramm t₅. Wenn nachfolgend von dem Gasstrom G die Rede ist, so ist damit der Gasstrom in der Sorptionspuffer-Vorrichtung gemeint.

Der erste Zeitpunkt ist t₁ und kann mit dem Zeitpunkt t₁ der Fig. 2 übereinstimmen. Zu diesem Zeitpunkt t₁ ist eine Phase P2 mit einer erhöhten Beladung ϕ₂ des Gasstroms G₁ gerade zu Ende. Während dieser Phase P2 hat sich in dem Abschnitt A₁ des Sorptionspfades 45 ein Bereich B₁ mit erhöhter Beladung ψ des Sorptionsmittels 44 ausgebildet. Dieser Bereich B₁ weist eine Breite auf, die insbesondere von der Dauer der Phase P2, dem Massenstrom und der Beladung ϕ₂ des beladenen Gasstroms G₁ abhängt (siehe Fig. 2). An den Zeitpunkt t₁ schließt sich eine Phase P1 mit einer erniedrigten Beladung ϕ₁ des beladenen Gasstroms G₁ an, die bis zu einem Zeitpunkt t₂ andauert, wie es beispielsweise in Fig. 2 dargestellt ist.

Der zweite Zeitpunkt t₂ kann beispielsweise mit dem Zeitpunkt t₂ der Fig. 2 übereinstimmen. Wie in dem Diagramm t₂ dargestellt, wurde der Bereich B₁ erhöhter Beladung ψ des Sorptionsmittels 44 von dem Abschnitt A₁ in den Abschnitt A₂ des Sorptionspfades 45 in Richtung zum Ausgang x₂ hin verschoben. Dies kann wie folgt erklärt werden: In der Phase P1 weist der beladene Gasstrom G₁ eine erniedrigte Beladung ϕ₁ auf, weshalb ein Übergang des sorbierbaren Stoffs von dem mit erhöhter Beladung ψ vorliegenden Sorptionsmittel 45 in dem Abschnitt A₁ auf den Gasstrom G möglich ist, womit sich die Beladung ψ des Sorptionsmittels 45 in dem Abschnitt A₁ reduziert. Der Gasstrom G kann daher nach dem Durchströmen des Abschnitts A₁ eine gegenüber der erniedrigten Beladung ϕ₁ höhere Beladung ϕ aufweisen. Wenn der Gasstrom G den Bereich A₁ durchströmt hat, durchströmt er entlang des Sorptionspfades 45 den Bereich A₂, in welchem das Sorptionsmittel 44 zunächst eine erniedrigte Beladung ψ aufweist (entsprechend der Darstellung des Diagramms t₁). Deshalb kann ein Übergang des sorbierbaren Stoffes von dem Gasstrom G auf das Sorptionsmittel 44 in dem Bereich A₂ erfolgen. Somit wird der Bereich B₁ erhöhter Beladung ψ des Sorptionsmittels 44 entlang des Sorptionspfades 45 in den Abschnitt A₂ verschoben. Man kann auch sagen, die Beladungsfront in dem Sorptionsmittel 45 verschiebt sich.

Der dritte Zeitpunkt t₃ entspricht einem Zeitpunkt nach dem Zeitpunkt t₂, wenn eine weitere Phase P2 gerade zu Ende ist. Deshalb hat sich an in dem Abschnitt A₁ ein weiterer Bereich B₂ mit einer erhöhten Beladung ψ des Sorptionsmittels 44 ausgebildet und der Bereich B₁ erhöhter Beladung ψ wurde von dem Abschnitt A₂ in den Abschnitt A₃ entlang des Sorptionspfades 45 verschoben.

Der vierte Zeitpunkt t₄ entspricht einem Zeitpunkt nach dem Zeitpunkt t₃, wenn eine weitere Phase P1 gerade zu Ende ist. Deshalb wurden die beiden Bereiche B₁, B₂ mit erhöhter Beladung ψ des Sorptionsmittels 44 entlang des Sorptionspfades 45 in den jeweils nächstliegenden Abschnitt, A₂ bzw. A₄, verschoben.

Der fünfte dargestellte Zeitpunkt t₅ entspricht einem Zeitpunkt nach dem Zeitpunkt t₄, wenn eine weitere Phase P2 gerade zu Ende ist, weshalb sich ein dritter Bereich B₃ erhöhter Beladung ψ des Sorptionsmittels 44 in dem Abschnitt A₁ ausgebildet hat. Die beiden weiteren Bereiche B₁, B₂ mit erhöhter Beladung ψ des Sorptionsmittels 44 wurden erneut entlang des Sorptionspfades 45 in den jeweils nächstliegenden Abschnitt, A₃ bzw. A₅, verschoben.

In der dargestellten Zeitreihe mit Momentaufnahmen der Beladungsfront in dem Sorptionsmittel 44 ist die Sorptionspuffer-Vorrichtung 40 zur Aufnahme von drei unterschiedlichen Bereichen B₁, B₂, B₃ mit einer erhöhten Beladung ψ des Sorptionsmittels 44 geeignet. Zwischen diesen Bereichen B₁, B₂, B₃ liegen jeweils Bereiche mit einer erniedrigten Beladung ψ des Sorptionsmittels 44.

In der Fig. 3 ist ein weiterer Effekt dargestellt. Die relative Beladung ψ des Sorptionsmittels 44 in einem Bereich B₁, B₂, B₃ nimmt ab, wenn der Bereich das Sorptionsmittel 44 entlang des Sorptionspfades 45 durchläuft. In der Fig. 3 ist dies an der Höhe der Beladung ψ eines Bereichs B₁, B₂, B₃ zu unterschiedlichen Zeitpunkten t₁ - t₅ dargestellt. Gleichzeitig verbreitert sich ein jeweiliger Bereich B₁, B₂, B₃, da die Gesamtmenge des sorbierbaren Stoffes erhalten bleibt.

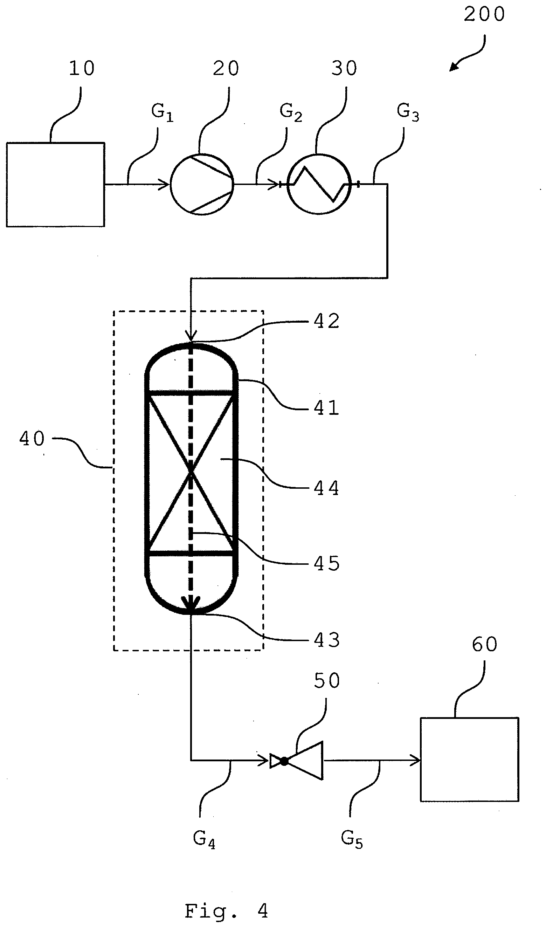

Fig. 4 zeigt ein R&I-Fließschema eines zweiten Ausführungsbeispiels einer verfahrenstechnischen Anlage 200, die zur Durchführung des Verfahrens geeignet ist. Die verfahrenstechnische Anlage 200 umfasst in dem Ausführungsbeispiel der Fig. 4 eine Adsorptionsvorrichtung 10, einen Kompressor 20, eine Gaskühlungsvorrichtung 30, eine Sorptionspuffer-Vorrichtung 40, ein Druckminderer 50 sowie eine Gaspipeline 60.

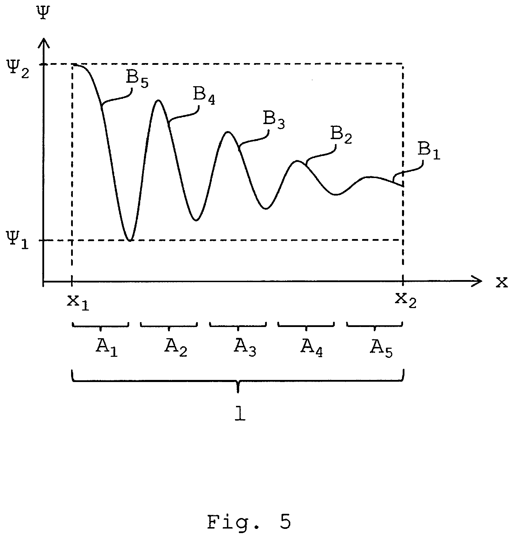

Der von der Adsorptionsvorrichtung 10 kommende beladene Gasstrom G₁ wird dem Kompressor 20 zugeführt und komprimiert. Beispielsweise beträgt der Druck des komprimierten Gasstroms G₂ 25 bar. Der derart mit Druck beaufschlagte Gasstrom G₂ wird der Gaskühlungsvorrichtung 30 zugeführt und dort auf eine Gastemperatur von 20°C - 50°C abgekühlt. Dabei kann es insbesondere während der Phasen P2 mit einer erhöhten Beladung ϕ₂ des beladenen Gasstroms G₁ vorkommen, dass eine Menge des sorbierbaren Stoffes in der Gaskühlungsvorrichtung 30 kondensiert somit abgeschieden wird. Der abgekühlte Gasstrom G₃ kann daher bereits eine gegenüber der Beladung ϕ₂ des beladenen Gasstroms G₁ reduzierte Beladung ϕ'₂ aufweisen. Der abgekühlte Gasstrom G₃ wird anschließend der Sorptionspuffer-Vorrichtung 40 zugeführt. Die Sorptionspuffer-Vorrichtung 40 des Ausführungsbeispiels ist derart ausgelegt, dass sie zur Aufnahme von fünf Bereichen B₁ - B₅ mit erhöhter Beladung ψ des Sorptionsmittels 44 geeignet ist (siehe Fig. 5). Ansonsten funktioniert die Sorptionspuffer-Vorrichtung 40 wie vorstehend anhand der Fig. 3 erläutert.

Der behandelte Gasstrom G₄ wird nach der Sorptionspuffer-Vorrichtung 40 einem Druckminderer 50 zugeführt, der den Druck des Gases auf 15 bar reduziert. Der derart entspannte Gasstrom G₅ weist insbesondere einen Taupunkt auf, der unter einer Temperatur der Gaspipeline 60 liegt, mittels welcher der entspannte Gasstrom G₅ beispielsweise zu einer weiteren verfahrenstechnischen Anlage (nicht gezeigt) transportiert wird. Somit ist eine Kondensation des sorbierbaren Stoffes in der Gaspipeline 60 wirksam verhindert und negative Effekte, wie beispielsweise eine Korrosion der Gaspipeline 60 sind vermindert.

Fig. 5 zeigt ein Diagramm eines Beispiels einer Beladungsfront eines Sorptionsmittels 44 in einer Sorptionspuffer-Vorrichtung 40, wie sie beispielsweise in einer der verfahrenstechnischen Anlagen 100, 200 verwendet werden kann. Dabei ist die Beladungsfront zu einem Zeitpunkt dargestellt. In dem Beispiel der Fig. 5 ist die Sorptionspuffer-Vorrichtung 40 dazu eingerichtet, insgesamt fünf Bereiche B₁ - B₅ mit einer erhöhten Beladung ψ des Sorptionsmittels 44 aufzunehmen. Die fünf Bereiche B₁ - B₅ befinden sich in unterschiedlichen Abschnitten A₁ - A₅ entlang des Sorptionspfades 45 (siehe Fig. 4) und weisen jeweils ein relatives Maximum der Beladung ψ des Sorptionsmittels 44 auf. Der dargestellte Zeitpunkt in der Fig. 5 entspricht einem Zeitpunkt nach dem Ablauf von wenigstens fünf Zyklen, wobei ein Zyklus eine Abfolge einer Phase P1 mit einer anschließenden Phase P2, beispielsweise gemäß der Fig. 2, umfasst.

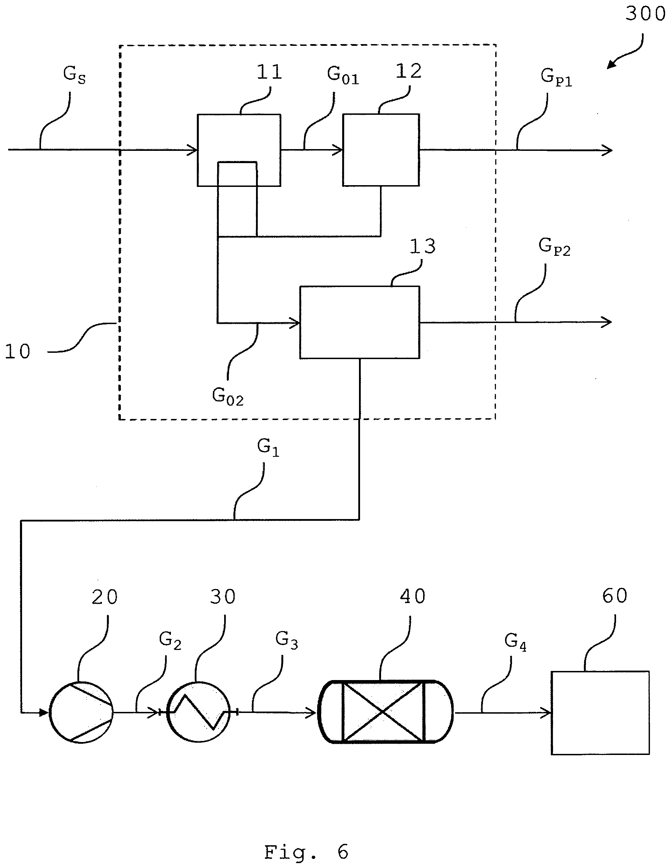

Fig. 6 zeigt ein R&I-Fließschema eines dritten Ausführungsbeispiels einer verfahrenstechnischen Anlage 300, die zur Durchführung des Verfahrens geeignet ist. Die verfahrenstechnische Anlage 300 ist insbesondere zur Zerlegung eines Synthese-Gasstroms G_{S} unter Bereitstellung eines ersten Produkts G_{P1}, das überwiegend CO umfasst, und eines zweiten Produkts G_{P2}, das überwiegend H₂ umfasst, ausgelegt. Die Adsorptionsvorrichtung 10 ist in dem Ausführungsbeispiel aus einer Temperaturwechsel-Adsorptionsvorrichtung 11, einer Kältekammer 12 und einer Druckwechsel-Adsorptionsvorrichtung 13 gebildet. Ferner weist die verfahrenstechnische Anlage 300 einen Kompressor 20, eine Gaskühlungsvorrichtung 30, eine Sorptionspuffer-Vorrichtung 40 sowie eine Gaspipeline 60 auf.

Der Synthese-Gasstrom G_{S} strömt zunächst in die Temperaturwechsel-Adsorptionsvorrichtung 11 und wird dort in einen Gasstrom G₀₁ überführt, der hauptsächlich CO und H₂ umfasst. Die weiteren Bestandteile des Synthese-Gasstroms G_{S} werden in der Temperaturwechsel-Adsorptionsvorrichtung 11 zurückgehalten. Der Gasstrom G₀₁ wird der Kältekammer 12 zugeführt, in welcher H₂ von CO abgetrennt wird. In der Kältekammer 12 fällt CO als Produkt G_{P1} an und kann in weiteren Prozessen verwendet werden (nicht gezeigt). Der Gasstrom G₀₂ umfasst hauptsächlich H₂. Wie in dem Schema dargestellt, wird dieser Gasstrom G₀₂ phasenweise zur Regeneration der Temperaturwechsel-Adsorptionsvorrichtung 11 verwendet. Insbesondere während dieser Regeneration tritt eine erhöhte Beladung ϕ des Gasstroms G₁ auf. In dem Beispiel des zeitlichen Ablaufs der Fig. 2 entspricht das der Phase P2. Der Gasstrom G₀₂ wird der Druckwechsel-Adsorptionsvorrichtung 13 zugeführt. Dort wird insbesondere H₂ von dem Gasstrom G₀₂ abgetrennt und als Produkt G_{P2} bereitgestellt.

Der Restgasstrom bildet den beladenen Gasstrom G₁, der die weiteren Komponenten Kompressor 20, Gaskühlungsvorrichtung 30, Sorptionspuffer-Vorrichtung 40 durchströmt und schließlich in eine Gaspipeline 60 eingeleitet wird. Dabei wird der Gasstrom in jeder dieser Vorrichtungen in einen Gasstrom mit veränderten Zustandsgrößen überführt, beispielsweise wie dies in dem Ausführungsbeispiel der verfahrenstechnischen Anlage 200 gemäß Fig. 4 beschrieben ist. Der Gasstrom G₁ - G₄ ist beispielsweise zur Verbrennung in einem Kraftwerk geeignet (nicht gezeigt).

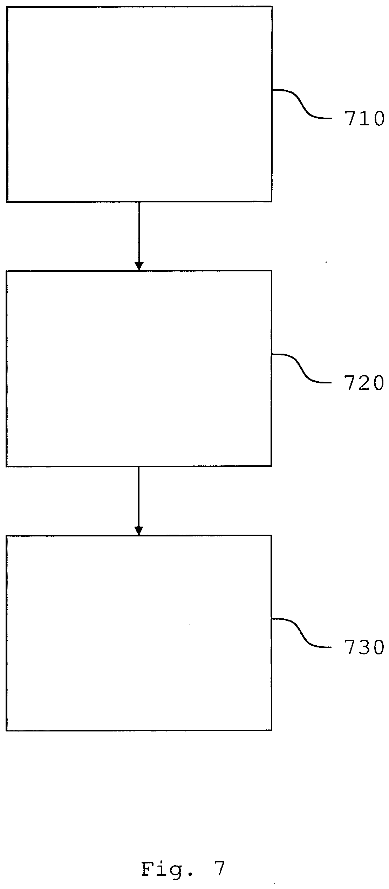

Fig. 7 zeigt ein Blockschaltbild eines ersten Ausführungsbeispiels eines Verfahrens zum Betreiben einer verfahrenstechnischen Anlage, beispielsweise der verfahrenstechnischen Anlage 100 des Ausführungsbeispiels der Fig. 1. Das dargestellte Verfahren umfasst die Schritte:
Zuführen 710 eines beladenen Gasstroms G₁ an eine Sorptionspuffer-Vorrichtung 40. Der Gasstrom G₁ ist dabei von einer Adsorptionsvorrichtung 10 bereitgestellt. Das Zuführen 710 kann bedeuten, dass der beladene Gasstrom G₁ von der Adsorptionsanlage 10 an einen Eingang 42 der Sorptionspuffer-Vorrichtung 40 mittels einer Rohrleitung geleitet wird.

Leiten 720 des beladenen Gasstroms G₁ in der Sorptionspuffer-Vorrichtung 40 durch ein Sorptionsmittel 44 entlang eines Sorptionspfades 45. Dabei kann insbesondere mittels Sorption eine Änderung der Beladung ϕ des Gasstroms G₁ und der Beladung ψ des Sorptionsmittels 44 in einzelnen Abschnitten entlang des Sorptionspfades 45 auftreten. Insbesondere bildet sich eine Beladungsfront mit mehreren Bereichen B₁ - B₅ mit erhöhter Beladung ψ des Sorptionsmittels 44 aus, die in Abhängigkeit der Beladung ϕ des beladenen Gasstroms G₁ sowie des Massenstroms des beladenen Gasstroms G₁ entlang des Sorptionspfades 45 verschoben wird. Die einzelnen Bereiche B₁ - B₅ sind dabei durch lokale Maxima in der Beladung ψ des Sorptionsmittels 44 charakterisiert und sind durch lokale Minima in der Beladung ψ voneinander getrennt. Im Laufe des Verschiebens der einzelnen Bereiche B₁ - B₅ vergleichmäßigt sich die Beladung ψ des Sorptionsmittels 45 derart, dass eine Amplitude, die beispielsweise durch einen Unterschied in der Beladung ψ des Sorptionsmittels 44 an einem lokalen Maximum zu einem benachbarten lokalen Minimum bestimmt werden kann, entlang des Sorptionspfades 45 abnimmt.

Abgreifen 730 des behandelten Gasstroms G₄ an einem Ausgang 43 der Sorptionspuffer-Vorrichtung 40. Ein Abgreifen 730 besteht insbesondere in einem Einleiten in eine an den Ausgang 43 angeschlossene Rohrleitung, um den behandelten Gasstrom G₄ weiteren Prozessen zuzuführen.

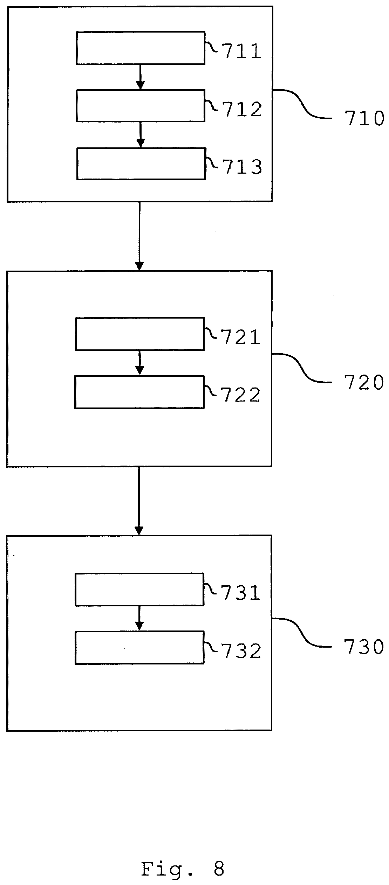

Fig. 8 zeigt ein Blockschaltbild eines zweiten Ausführungsbeispiels eines Verfahrens zum Betreiben einer verfahrenstechnischen Anlage, beispielsweise einer der verfahrenstechnischen Anlagen 100, 200, 300 der Ausführungsbeispiele der Fig. 1, 4 oder 6. Das Verfahren dieses Ausführungsbeispiels umfasst die gleichen Verfahrensschritte 710, 720, 730 wie das vorhergehende Ausführungsbeispiel (siehe Fig. 7), wobei den einzelnen Verfahrensschritten verschiedene Teilverfahrensschritte zugeordnet sind.
Demnach umfasst das Zuleiten 710 ein Durchleiten 711 eines Synthese-Gasstroms G_{S} durch eine Adsorptionsvorrichtung 10 zur Bereitstellung eines beladenen Gasstroms G₁. Es schließt sich ein Komprimieren 712 des beladenen Gasstroms G₁ zur Bereitstellung eines mit einem Druck beaufschlagten Gasstroms G₂ an. Ferner wird der komprimierte Gasstrom G₂ zur Bereitstellung eines abgekühlten Gasstroms G₃ abgekühlt 713. Der abgekühlte Gasstrom G₃ wird dann dem Eingang 42 der Sorptionspuffer-Vorrichtung 40 zugeleitet.
Der Verfahrensschritt des Leitens 720 des Gasstroms umfasst zumindest die Teilschritte eines Auswählens 721 einer Länge eines Sorptionspfades 45 und einer Menge eines Sorptionsmittels 44 in der Sorptionspuffer-Vorrichtung 40 derart, dass diese zur Aufnahme von wenigstens drei, bevorzugt vier, weiter bevorzugt fünf unterschiedlichen Bereichen B₁ - B₅ mit erhöhter Beladung ψ des Sorptionsmittels 44 entlang des Sorptionspfades 45 geeignet ist, sowie des Durchströmens 722 des Sorptionsmittels 44 entlang des Sorptionspfades 45 mittels des beladenen Gasstroms G₁ zur Bereitstellung eines behandelten Gasstroms G₄ an einem Ausgang 43 der Sorptionspuffer-Vorrichtung 40.
Der Verfahrensschritt des Abgreifens 730 umfasst insbesondere ein Entspannen 731 des behandelten Gasstroms G₄ zur Bereitstellung eines entspannten Gasstroms G₅ und ein Zuführen 732 des entspannten Gasstroms G₅ an eine Gaspipeline 60 zum Transport des entspannten Gasstroms G₅ an eine weitere Vorrichtung oder verfahrenstechnische Anlage.

### Verwendete Bezugszeichen

- 100: verfahrenstechnische Anlage
- 200: verfahrenstechnische Anlage
- 300: verfahrenstechnische Anlage
- 10: Adsorptionsvorrichtung
- 11: Temperaturwechsel-Adsorptionsvorrichtung
- 12: Kältekammer
- 13: Druckwechsel-Adsorptionsvorrichtung
- 20: Kompressor
- 30: Gaskühlungsvorrichtung
- 40: Sorptionspuffer-Vorrichtung
- 41: Behälter
- 42: Eingang
- 43: Ausgang
- 44: Sorptionsmittel
- 45: Sorptionspfad
- 50: Druckminderer
- 60: Gaspipeline
- 710: Verfahrensschritt (Zuführen)
- 711: Verfahrensschritt (Leiten durch Adsorptionsvorrichtung)
- 712: Verfahrensschritt (Komprimieren)
- 713: Verfahrensschritt (Abkühlen)
- 720: Verfahrensschritt (Leiten)
- 721: Verfahrensschritt (Auswählen)
- 722: Verfahrensschritt (Durchströmen)
- 730: Verfahrensschritt (Abgreifen)
- 731: Verfahrensschritt (Entspannen)
- 732: Verfahrensschritt (Zuführen an eine Gaspipeline)

- A₁: Abschnitt
- A₂: Abschnitt
- A₃: Abschnitt
- A₄: Abschnitt
- A₅: Abschnitt
- B₁: Bereich mit erhöhter Beladung des Sorptionsmittels
- B₂: Bereich mit erhöhter Beladung des Sorptionsmittels
- B₃: Bereich mit erhöhter Beladung des Sorptionsmittels
- B₄: Bereich mit erhöhter Beladung des Sorptionsmittels
- B₅: Bereich mit erhöhter Beladung des Sorptionsmittels
- G: Gasstrom in der Sorptionspuffer-Vorrichtung
- G₀₁: Gasstrom zur Zuführung in die Cold-Box
- G₀₂: Gasstrom zur Zuführung in die Druckwechsel-Adsorptionsvorrichtung
- G₁: beladener Gasstrom
- G₂: komprimierter Gasstrom
- G₃: abgekühlter Gasstrom
- G₄: behandelter Gasstrom
- G₅: entspannter Gasstrom
- G_{P1}: Produkt 1
- G_{P2}: Produkt 2
- G_{S}: Synthese-Gasstrom
- I: Länge des Sorptionspfades
- P1: Phase
- P2: Phase
- t: Zeit
- t₁: Zeitpunkt
- t₂: Zeitpunkt
- t₃: Zeitpunkt
- t₄: Zeitpunkt
- t₅: Zeitpunkt
- x: Position
- x₁: Position (Eingang)
- x₂: Position (Ausgang)

- ϕ: Beladung des Gasstroms
- ϕ₁: erniedrigte Beladung des beladenen Gasstroms
- ϕ₂: erhöhte Beladung des beladenen Gasstroms
- ϕ'₁: erniedrigte Beladung des behandelten Gasstroms
- ϕ'₂: erhöhte Betadung des behandelten Gasstroms
- ψ: Beladung des Sorptionsmittels
- ψ₁: maximale Beladung des Sorptionsmittels
- ψ₂: minimale Beladung des Sorptionsmittels

## Patentansprüche

1. Verfahren zum Betreiben einer verfahrenstechnischen Anlage (100) mit einer Adsorptionsvorrichtung (10), welche einen mit einem sorbierbaren Stoff beladenen Gasstrom (G₁) mit einem vorgegebenen Massenstrom ausgibt,
wobei der beladene Gasstrom (G₁) zeitlich abwechselnd aufeinanderfolgende Phasen (P1) erniedrigter Beladung (ϕ₁) und Phasen (P2) erhöhter Beladung (ϕ₂) umfasst, mit den Schritten:
Zuführen (710) des beladenen Gasstroms (G₁) an einen Eingang (42) einer Sorptionspuffer-Vorrichtung (40);
Leiten (720) des beladenen Gasstroms (G₁) in der Sorptionspuffer-Vorrichtung (40) durch ein mit einem zur Aufnahme einer Beladung (ψ) des sorbierbaren Stoffes geeignetes Sorptionsmittel (44) entlang eines Sorptionspfades (45), der von dem Eingang (42) zu einem Ausgang (43) der Sorptionspuffer-Vorrichtung (40) führt, wobei der sorbierbare Stoff in Abhängigkeit der Beladung des Gasstroms (ϕ) und Beladung des Sorptionsmittels (ψ) von dem Gasstrom auf das Sorptionsmittel (44) oder von dem Sorptionsmittel (44) auf den Gasstrom übergeht;
Abgreifen (730) eines behandelten Gasstroms (G₄) an dem Ausgang (43) der Sorptionspuffer-Vorrichtung (40),
wobei sich während einer Phase (P2) erhöhter Beladung (ϕ₂) des Gasstroms (G₁) mit dem sorbierbaren Stoff sich in einem von dem Eingang (42) der Sorptionspuffer-Vorrichtung (40) entlang des Sorptionspfades (45) erstreckender Bereich (B₁) ein Bereich mit einer erhöhten Beladung (ψ) des Sorptionsmittels (44) mit dem sorbierbaren Stoff ausbildet und sich während einer darauf folgenden Phase (P1) erniedrigter Beladung (ϕ₁) des Gasstroms (G₁) der Bereich mit der erhöhten Beladung (ψ) des Sorptionsmittels (44) in Richtung zum Ausgang (43) der Sorptionspuffer-Vorrichtung (40) entlang des Sorptionspfades (45) verschiebt; und
wobei eine Länge (I) des Sorptionspfades (45) und eine Menge des Sorptionsmittels (44) in der Sorptionspuffer-Vorrichtung (40) derart gewählt (721) werden, dass die Sorptionspuffer-Vorrichtung (40) im Betrieb der verfahrenstechnischen Anlage (100) zur Aufnahme von wenigstens drei, vorzugsweise wenigstens vier, weiter bevorzugt wenigstens fünf unterschiedlichen Bereichen (B₁ - B5) erhöhter Beladung (ψ) des Sorptionsmittels (44) entlang des Sorptionspfades (45) eingerichtet ist.

2. Verfahren gemäß Anspruch 1, ferner aufweisend:
Entspannen (731) des behandelten Gasstroms (G₄) mit Hilfe eines in Abströmrichtung zu der Sorptionspuffer-Vorrichtung (40) angeordneten Druckminderers (50), wobei ein entspannter Gasstrom (G₅) erzeugt wird; und
Zuführen (732) des entspannten Gasstroms (G₅) an eine der Sorptionspuffer-Vorrichtung (40) nachgeschaltete Gaspipeline (60).

3. Verfahren gemäß Anspruch 2, wobei ein Gasdruckunterschied zwischen der Sorptionspuffer-Vorrichtung (40) und der Gaspipeline (60) 5 bar - 10 bar beträgt.

4. Verfahren gemäß einem der vorhergehenden Ansprüche, ferner aufweisend:
Abkühlen (713) des beladenen Gasstroms (G₁) mit Hilfe einer der Sorptionspuffer-Vorrichtung (40) vorgeschalteten Gaskühlungsvorrichtung (30), wobei ein abgekühlter Gasstrom (G₃) erzeugt wird.

5. Verfahren gemäß Anspruch 4, wobei eine Gastemperatur des abgekühlten Gasstroms (G₃) 20°C - 50°C beträgt.

6. Verfahren gemäß einem der vorhergehenden Ansprüche, ferner aufweisend:
Komprimieren (712) des beladenen Gasstroms (G₁) mit Hilfe eines Kompressors (20), wobei ein mit einem Druck beaufschlagter Gasstrom (G₂) erzeugt wird.

7. Verfahren gemäß Anspruch 6, wobei ein Gasdruck des mit dem Druck beaufschlagten Gasstroms (G₂) 20 - 30 bar beträgt.

8. Verfahren gemäß einem der vorhergehenden Ansprüche, wobei die Adsorptionsvorrichtung (10) eine Temperaturwechsel -Adsorptionsvorrichtung (11) und/oder eine Druckwechsel-Adsorptionsvorrichtung (12) umfasst.

9. Verfahren gemäß einem der vorhergehenden Ansprüche, wobei der beladene Gasstrom (G₁) und/oder der behandelte Gasstrom (G₄) gasförmigen Wasserstoff, gasförmiges Kohlenstoffmonoxid, gasförmiges Kohlenstoffdioxid, gasförmige organische Verbindungen, gasförmiges Wasser, gasförmigen Stickstoff, gasförmigen Sauerstoff und/oder ein gasförmiges Edelgas sowie Kombinationen hiervon umfasst.

10. Verfahren gemäß Anspruch 9, wobei der beladene Gasstrom (G₁) eine Wassermenge von 0 - 4000 mol-ppm aufweist und der behandelte Gasstrom (G₄) eine Wassermenge von 500 - 2000 mol-ppm, bevorzugt 750 - 1500 mol-ppm aufweist.

11. Verfahren gemäß einem der vorhergehenden Ansprüche, wobei die Phase (P2) erhöhter Beladung (ϕ₂) des beladenen Gasstroms (G₁) 2 - 10 h umfasst und die Phase (P1) erniedrigter Beladung (ϕ₁) des beladenen Gasstroms (G₁) wenigstens doppelt so lange, vorzugsweise wenigstens dreimal so lange wie die Phase (P2) erhöhter Beladung (ϕ₂) des beladenen Gasstroms (G₁) andauert.

12. Verfahren gemäß einem der vorhergehenden Ansprüche, wobei ein Massenstrom des beladenen Gasstroms (G₁) und/oder des behandelten Gasstroms (G₄) zwischen 500 Norm-m3/h und 20000 Norm-m3/h, bevorzugt zwischen 8000 Norm-m³/h und 17000 Norm-m3/h liegt.

## Claims

1. Method for operating an industrial plant (100) having an adsorption device (10) which emits a gas stream (G₁) laden with a sorbable substance with a predefined mass flow rate,
wherein phases (P1) of reduced loading (ϕ₁) and phases (P2) of elevated loading (ϕ₂), which follow one another in a temporally alternating manner, are involved for the laden gas stream (G₁), comprising the steps of:
feeding (710) of the laden gas stream (G₁) to an inlet (42) of a sorption buffer device (40);
conducting (720) of the laden gas stream (G₁) in the sorption buffer device (40) through a sorbent (44), which is suitable with a for receiving a loading (ψ) of the sorbable substance, along a sorption path (45), which leads from the inlet (42) to an outlet (43) of the sorption buffer device (40), wherein the sorbable substance passes from the gas stream to the sorbent (44), or from the sorbent (44) to the gas stream, in dependence on the loading of the gas stream (ϕ) and the loading of the sorbent (ψ);
tapping off (730) of a treated gas stream (G₄) at the outlet (43) of the sorption buffer device (40),
wherein, during a phase (P2) of elevated loading (ϕ₂) of the gas stream (G₁) with the sorbable substance, region (B₁) a region with an elevated loading (ψ) of the sorbent (44) with the sorbable substance, which region extends in a from the inlet (42) of the sorption buffer device (40) along the sorption path (45), is formed, and, during a subsequent phase (P1) of reduced loading (ϕ₁) of the gas stream (G₁), the region with the elevated loading (ψ) of the sorbent (44) is shifted along the sorption path (45) in the direction toward the outlet (43) of the sorbent buffer device (40); and
wherein a length (1) of the sorption path (45) and a quantity of the sorbent (44) in the sorption buffer device (40) are selected (721) in such a way that the sorption buffer device (40) is set up for accommodating at least three, preferably at least four, more preferably at least five, different regions (B₁ - B₅) of elevated loading (ψ) of the sorbent (44) along the sorption path (45) during the operation of the industrial plant (100).

2. Method according to Claim 1, further comprising:
expansion (731) of the treated gas stream (G₄) with the aid of a pressure reducer (50) arranged in the outflow direction with respect to the sorption buffer device (40), wherein an expanded gas stream (G₅) is produced; and
feeding (732) of the expanded gas stream (G₅) to a gas pipeline (60) arranged downstream of the sorption buffer device (40).

3. Method according to Claim 2, wherein a gas pressure difference between the sorption buffer device (40) and the gas pipeline (60) is 5 bar - 10 bar.

4. Method according to one of the preceding claims, furthermore comprising:
cooling (713) of the laden gas stream (G₁) with the aid of a gas-cooling device (30) arranged upstream of the sorption buffer device (40), wherein a cooled gas stream (G₃) is produced.

5. Method according to Claim 4, wherein a gas temperature of the cooled gas stream (G₃) is 20°C - 50°C.

6. Method according to one of the preceding claims, furthermore comprising:
compression (712) of the laden gas stream (G₁) with the aid of a compressor (20), wherein a gas stream (G₂) subjected to a pressure is produced.

7. Method according to Claim 6, wherein a gas pressure of the gas stream (G₂) subjected to the pressure is 20 - 30 bar.

8. Method according to one of the preceding claims, wherein the adsorption device (10) comprises a temperature-change adsorption device (11) and/or a pressure-change adsorption device (12).

9. Method according to one of the preceding claims, wherein the laden gas stream (G₁) and/or the treated gas stream (G₄) comprise(s) gaseous hydrogen, gaseous carbon monoxide, gaseous carbon dioxide, gaseous organic compounds, gaseous water, gaseous nitrogen, gaseous oxygen and/or a gaseous noble gas, or combinations of these.

10. Method according to Claim 9, wherein the laden gas stream (G₁) has a water quantity of 0 - 4000 ppm by mole, and the treated gas stream (G₄) has a water quantity of 500 - 2000 ppm by mole, preferably 750 - 1500 ppm by mole.

11. Method according to one of the preceding claims, wherein the phase (P2) of elevated loading (ϕ₂) of the laden gas stream (G₁) comprises a duration of 2 - 10 h, and the phase (P1) of reduced loading (ϕ₁) of the laden gas stream (G₁) lasts at least twice as long, preferably at least three times as long, as the phase (P2) of elevated loading (ϕ₂) of the laden gas stream (G₁).

12. Method according to one of the preceding claims, wherein the mass flow rate of the laden gas stream (G₁) and/or of the treated gas stream (G₄) lies between 500 standard m³/h and 20 000 standard m³/h, preferably between 8000 standard m³/h and 17 000 standard m³/h.

## Revendications

1. Procédé de fonctionnement d'une installation technique (100) dotée d'un dispositif d'adsorption (10), laquelle délivre un flux de gaz (G₁) chargé d'une substance sorbable avec un flux de masse prédéfini, dans lequel le flux de gaz chargé (G₁) comprend des phases (P1) de charge réduite (ϕ₁) et des phases (P2) de charge accrue (ϕ₂) consécutives l'une à l'autre et en alternance temporelle, avec les étapes :
d'apport (710) du flux de gaz chargé (G₁) à une admission (42) d'un dispositif tampon de sorption (40) ;
de direction (720) du flux de gaz chargé (G₁) dans le dispositif tampon de sorption (40) par un sorbant (44) adapté avec un à l'accueil d'une charge (ψ) de la substance sorbable, le long d'un chemin de sorption (45), lequel mène de l'admission (42) à une sortie (43) du dispositif tampon de sorption (40), dans lequel la substance sorbable passe du flux de gaz au sorbant (44) ou du sorbant (44) au flux de gaz, en fonction de la charge du flux de gaz (cp) et de la charge du sorbant (ψ) ;
de prélèvement (730) d'un flux de gaz traité (G₄) à la sortie (43) du dispositif tampon de sorption (40),
dans lequel pendant une phase (P2) de charge accrue (ϕ₂) en substance sorbable du flux de gaz (G₁), la zone (B₁) une zone de charge accrue (ψ) en substance sorbable du sorbant (44), s'étendant dans une depuis l'admission (42) du dispositif tampon de sorption (40) le long du chemin de sorption (45), se forme et pendant une phase consécutive (P1) de charge réduite (ϕ₁) du flux de gaz (G₁) la zone de charge accrue (ψ) du sorbant (44) se déplace dans la direction de la sortie (43) du dispositif tampon de sorption (40) le long du chemin de sorption (45) ; et
dans lequel une longueur (1) du chemin de sorption (45) et une quantité du sorbant (44) dans le dispositif tampon de sorption (40) sont choisies (721) de telle sorte que le dispositif tampon de sorption (40) est disposé pour accueillir, en fonctionnement de l'installation technique (100), au moins trois, de préférence au moins quatre, plus particulièrement au moins cinq zones différentes (B₁-B₅) de charge accrue (ψ) du sorbant (44) le long du chemin de sorption (45).

2. Procédé selon la revendication 1, comportant en outre :
la détente (731) du flux de gaz traité (G₄) à l'aide d'un réducteur de pression (50) agencé en direction de reflux du dispositif tampon de sorption (40), dans lequel un flux de gaz détendu (G₅) est obtenu ; et
l'apport (732) du flux de gaz détendu (G₅) à un gazoduc (60) en aval du dispositif tampon de sorption (40).

3. Procédé selon la revendication 2, dans lequel la différence de pression entre le dispositif tampon de sorption (40) et le gazoduc (60) est de 5 bar à 10 bar.

4. Procédé selon l'une des revendications précédentes, comportant en outre :
le refroidissement (713) du flux de gaz chargé (G₁) à l'aide d'un dispositif de refroidissement de gaz (30) agencé en amont du dispositif tampon de sorption (40), dans lequel un flux de gaz refroidi (G₃) est obtenu.

5. Procédé selon la revendication 4, dans lequel la température du gaz refroidi (G₃) est de 20 °C à 50 °C.

6. Procédé selon l'une des revendications précédentes, comportant en outre :
la compression (712) du flux de gaz chargé (G₁) à l'aide d'un compresseur (20), dans lequel un flux de gaz auquel une pression a été appliquée (G₂) est obtenu.

7. Procédé selon la revendication 6, dans lequel une pression de gaz du flux de gaz auquel une pression a été appliquée (G₂) est de 20 à 30 bar.

8. Procédé selon l'une des revendications précédentes, dans lequel le dispositif d'adsorption (10) comprend un dispositif de variation de température et d'adsorption (11) et/ou un dispositif de variation de pression et d'adsorption (12).

9. Procédé selon l'une des revendications précédentes, dans lequel le flux de gaz chargé (G₁) et/ou le flux de gaz traité (G₄) comportent de l'hydrogène gazeux, du monoxyde de carbone gazeux, du dioxyde de carbone gazeux, des composés organiques gazeux, de l'eau à l'état gazeux, de l'azote gazeux, de l'oxygène gazeux et/ou un gaz noble à l'état gazeux, ainsi que des combinaisons de ceux-ci.

10. Procédé selon la revendication 9, dans lequel le flux de gaz chargé (G₁) comporte une teneur en eau de 0 - 4 000 mol-ppm et le flux de gaz traité (G₄) comporte une teneur en eau de 500 à 2 000 mol-ppm, de préférence 750 - 1 500 mol-ppm.

11. Procédé selon l'une des revendications précédentes, dans lequel la phase (P2) de charge accrue (ϕ₂) du flux de gaz chargé (G₁) compte 2 à 10 h et la phase (P1) de charge réduite (ϕ₁) du flux de gaz chargé (G₁) dure au moins deux fois plus longtemps, de préférence au moins trois fois plus longtemps que la phase (P2) de charge accrue (ϕ₂) du flux de gaz chargé (G₁).

12. Procédé selon l'une des revendications précédentes, dans lequel un flux de masse du flux de gaz chargé (G₁) et/ou du flux de gaz traité (G₄) est compris entre 500 Nm³/h et 20 000 Nm³/h, de préférence entre 8 000 Nm³/h et 17 000 Nm³/h.
